# FASCICULE DE BREVET EUROPEEN

(11) **EP 1 058 348 B1**
(45) Date de publication et mention de la délivrance du brevet: **08.07.2009**
(21) Numéro de dépôt: 00410044.2
(22) Date de dépôt: 28.04.2000
(51) Int. Cl.: H01R 9/26

(54) **Dispositif d'alimentation électrique d'appareils modulaires de puissance tels des disjoncteurs, et appareil de coupure adapté à être raccordé à un tel dispositif**
Elektrische Versorgungseinrichtung für elektrische Leistungsapparatemodule wie Schutzschalter, sowie ein die Vorrichtung enthaltendes Schaltgerät
Device for supplying electric power to electrical power equipment modules such as circuit-breakers, and breaking apparatus adapted for use in such a system

(30) Priorité: 31.05.1999 FR 9907025
(43) Date de publication de la demande: 06.12.2000
(73) Titulaire: Schneider Electric Industries SAS, 92500 Rueil-Malmaison (FR)
(72) Inventeur: Filsnoel,Yann,, 38050 Grenoble cedex 09 (FR); Pellicano, Joseph,, 38050 Grenoble cedex 09 (FR); Vanzetto, Daniel,, 38050 Grenoble cedex 09 (FR)
(74) Mandataire: Jouvray, Marie-Andrée

(56) Documents cités:
- EP-A- 0 639 877
- EP-A- 0 891 026
- DE-A- 3 701 152

## Description

La présente invention concerne un dispositif d'alimentation électrique d'appareils modulaires de puissance tels des disjoncteurs, lesdits appareils étant destinés à être montés sur un rail et ayant des boîtiers accolés côte à côte, comprenant un ensemble de barres s'étendant parallèlement au rail et distribuant chacune une phase ou le neutre, et des broches s'étendant perpendiculairement auxdites barres et reliées électriquement chacune à l'une des barres de manière à distribuer successivement les différentes phases et le neutre, et ce de manière répétitive le long du rail, lesdites broches étant destinées à être reliées électriquement chacune à l'une des plages de contact de l'appareil.

On connaît des dispositifs tels que précédemment décrits, dénommés plus communément peigne ou répartiteur selon qu'ils coopèrent avec des bornes du type à cage à vis ou du type à pinces prévues sur la face de raccordement des appareils. Or, un inconvénient de ces dispositifs tient en ce que les broches sont facilement accessibles par l'utilisateur notamment pendant l'opération de raccordement. Il en résulte un risque que celui-ci entre malencontreusement en contact électrique avec les pièces sous tension desdites broches.
On connaît par exemple les documentes EP 0 639 877 et EP 0 891 026 décrivant des dispositifs comportant les caractéristiques selon le préambule de la revendication 1.
On connaît également le document DE 3 701 152 décrivant un dispositif de contact à fiche destiné à relier électriquement un conducteur avec une barre et comportant des broches s'étendant perpendiculairement à ladite barre.

La présente invention résout ce problème et propose un dispositif d'alimentation électrique d'appareils modulaires de puissance, dans lequel le risque qu'un utilisateur entre directement en contact électrique avec les parties sous tension est supprimé, ainsi qu'un appareil de coupure adapté à être utilisé avec un tel dispositif

A cet effet, la présente invention a pour objet un dispositif selon la revendication 1.

Selon une réalisation particulière, la pièce isolante précitée présente une forme sensiblement parallélépipédique et comporte un logement destiné à recevoir la broche et deux échancrures s'étendant parallèlement à la direction longitudinale de la broche de part et d'autre de ladite broche, lesdites échancrures étant dimensionnées de manière à empêcher à un doigt d'épreuve d'entrer en contact électrique avec les parties de la broche dégagées par les échancrures, mais à permettre le raccordement avec l'élément de connexion précité.

Selon une caractéristique particulière, la hauteur des échancrures définie perpendiculairement à la direction longitudinale de la broche et à celle des barres, est définie de manière à permettre le raccordement à l'élément de connexion mais à empêcher un doigt d'épreuve d'entrer en contact avec la broche.

Selon une autre réalisation, pour au moins l'une des broches, la pièce isolante précitée comporte en outre deux parois isolantes fermant les faces des échancrures s'étendant parallèlement à la direction longitudinale de la broche, de manière que la pièce isolante, ne présente plus que deux orifices d'accès à la broche situés de part et d'autre de la broche et en regard de la face de raccordement des appareils.

Les ouvertures sont de forme sensiblement rectangulaire et la largeur des ouvertures parallèlement à la direction des barres, est définie de manière à empêcher que le doigt d'épreuve n'entre en contact avec la broche, mais à autoriser le raccordement à l'élément de connexion.

L'invention a encore pour objet la combinaison d'un appareil de coupure électrique tel un disjoncteur comportant sur sa face de raccordement au moins une pince de connexion avec un dispositif comprenant les caractéristiques précédentes prises seules ou en combinaison coopérant avec ladite pince.

Avantageusement, l'appareil comprend, par module, une pince pour le raccordement à l'une des broches d'un dispositif tel que précédemment décrit, et un évidemment destiné à recevoir une broche non utilisée de ce dispositif

Mais d'autres avantageas et caractéristiques de l'invention apparaîtront mieux dans la description détaillée qui suit et se réfère aux dessins annexés donnés uniquement à titre d'exemple et dans lesquels :
La figure 1 est une vue en perspective, illustrant un dispositif d'alimentation selon l'invention,
La figure 2 est une vue en coupe transversale du dispositif de la figure 1 selon II-II,
La figure 3 est une vue partielle de face de la figure 1,
La figure 4 est une vue similaire à la figure 1, mais montrant une pince de connexion appartenant à un disjoncteur, en position connectée sur la broche,
La figure 5 est une vue partielle en perspective, illustrant un disjoncteur selon l'invention en position connectée sur un dispositif selon l'invention,
La figure 6 est une vue partielle en perspective, illustrant une seconde réalisation du dispositif selon l'invention prêt à être relié électriquement à un ensemble d'appareils électriques modulaires de puissance selon l'invention.
La figure 7 est une vue en coupe transversale suivant VII-VII de la figure précédente.

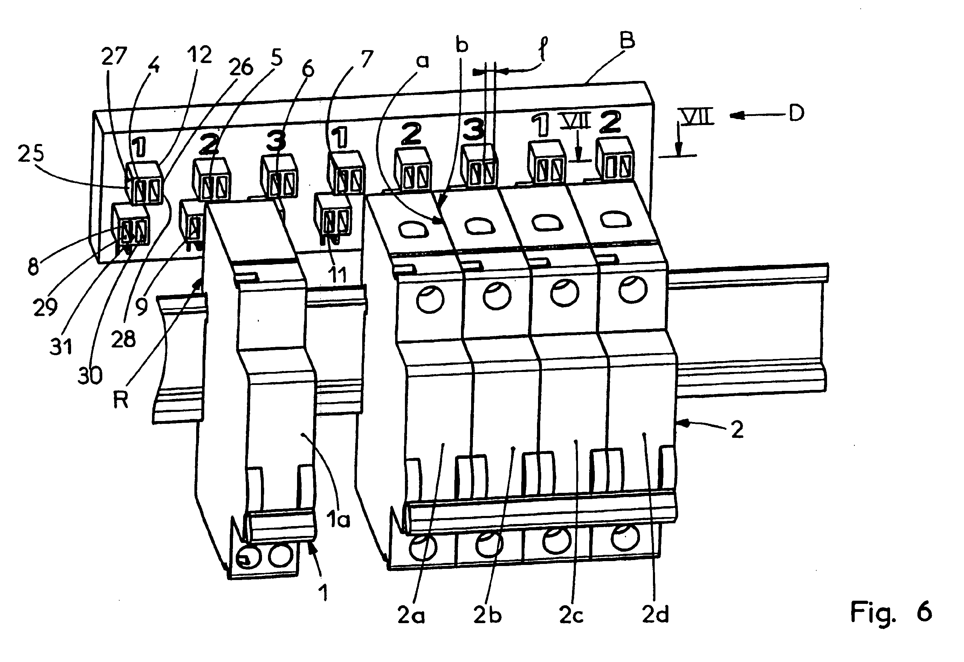

Sur les figures, on voit un dispositif d'alimentation électrique D selon l'invention, plus communément appelé répartiteur, destiné à assurer l'alimentation électrique d'un ensemble d'appareils électriques modulaires de puissance 1,2 (figure 6) tels des disjoncteurs, interrupteurs...etc., montés côte à côte sur un rail de montage en étant accolés deux à deux par les faces latérales a,b de leurs boîtiers. Chaque module 1a,2a,2b,2c,2d de ces appareils 1,2 renferme une unité de coupure d'une phase ou du neutre. Le répartiteur D comprend, logé dans un boîtier isolant B, un ensemble de quatre barres conductrices (non visibles sur les figures) montées parallèlement les unes aux autres et parallèlement au rail en position de connexion avec les appareils, lesdites barres véhiculant respectivement trois phases différentes et le neutre. Ce dispositif comporte également un certain nombre de broches 4 à 7 et 8 à 11, chacune étant fixée et reliée électriquement à l'une des barres et s'étendant perpendiculairement auxdites barres.

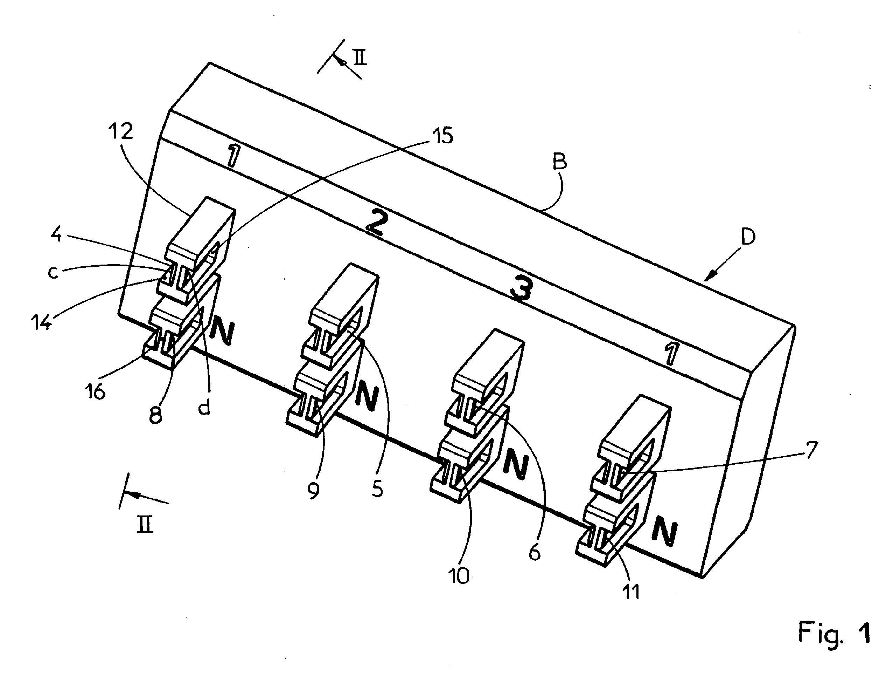

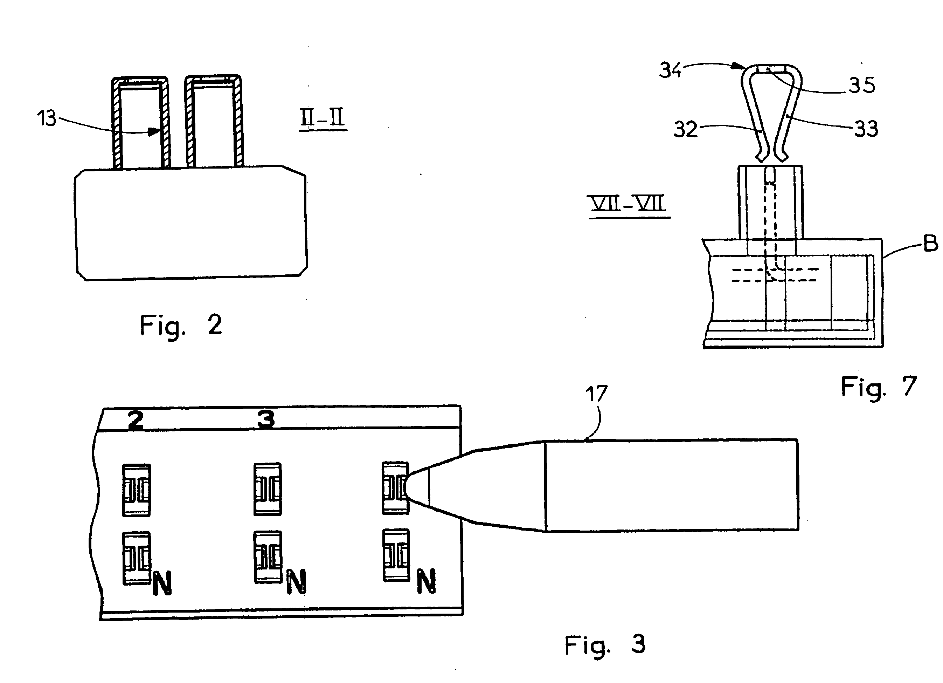

Sur toutes ces figures, aussi bien pour ce qui concerne la première réalisation du dispositif illustrée sur les figures 1 à 5, que pour la seconde réalisation illustrée sur les figures 6 et 7, le dispositif est du type tripolaire plus neutre, et comprend une première rangée de broches 4 à 7 véhiculant successivement les trois phases 1,2,3, et ce, de manière répétitive le long du répartiteur, et une seconde rangée de broches 8 à 11, parallèle à la première, lesdites broches véhiculant le neutre N. Sur les figures 1 à 5, on voit qu'une broche véhiculant le neutre 8 à 11 est placée sous chacune des broches 4 à 7 véhiculant une phase, le pas du répartiteur (distance séparant deux dents de phase successives ou deux dents de neutre successives) correspondant au pas des appareils, étant de 18mm.

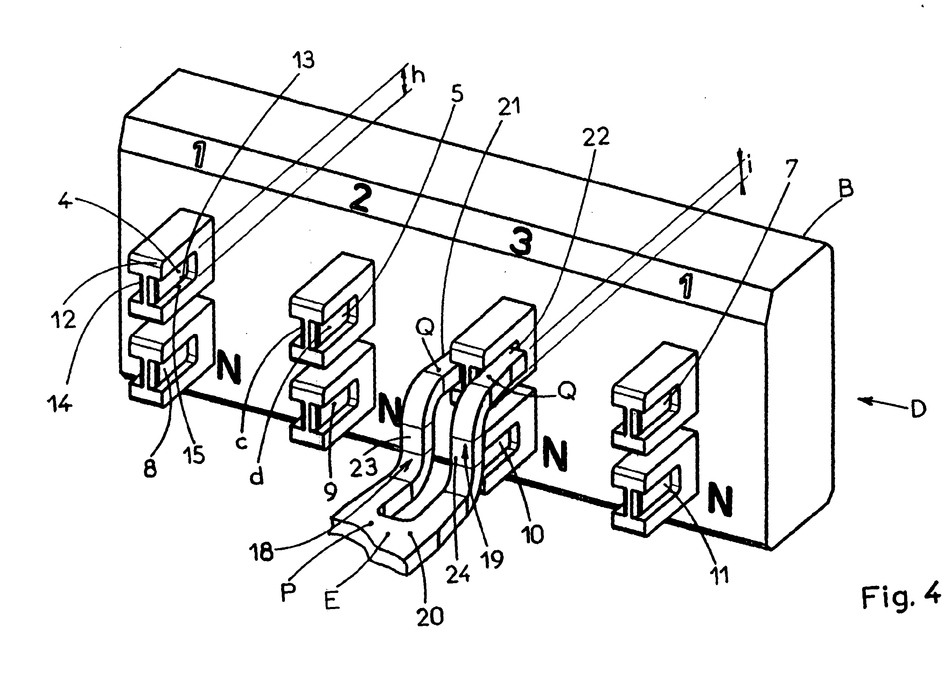

Conformément à l'invention, on voit que les broches 4 à 11 du répartiteur D sont logées dans une pièce électriquement isolante 12. Cette pièce 12 présente une forme sensiblement parallélépipédique et comporte un logement longitudinal 13 destiné à recevoir la broche 4 à 11 et deux échancrures 14,15 s'étendant parallèlement à la direction longitudinale de la broche 4 à 11 de part et d'autre de ladite broche 4 à 11, lesdites échancrures 14,15 libérant l'accès à deux faces latérales opposées c,d de la broche 4 à 11. On voit également sur ces figures, qu'une cloison isolante 16 appartenant à la pièce d'isolation 12 est présente en bout de chaque broche 4 à 11. On voit en particulier sur la figure 4, que la hauteur h des deux échancrures 14,15 définie perpendiculairement à la direction longitudinale de la broche et des barres, a été choisie, par rapport au diamètre d'un doigt d'épreuve 17, de manière qu'elle empêche l'introduction du doigt d'épreuve 17 au-delà d'une certaine limite, empêchant celui-ci d'entrer en contact électrique avec la broche 4 à 11. On notera que le doigt d'épreuve 17 utilisé correspond à un doigt normalisé d'un diamètre de 12mm. La hauteur h des échancrures 14,15 est également choisie de manière à permettre à un élément de connexion E appartenant à un appareil de puissance, de coopérer avec la broche correspondante 4 à 11.

Comme on le voit sur la figure 4, ces éléments de connexion E sont constitués par des pinces comportant chacune deux branches 18,19 aptes à être amenées respectivement en contact avec les deux faces libres c,d de la broche correspondante en position raccordée de la pince. La hauteur h des échancrures 14,15 nécessite donc d'être légèrement supérieure à la hauteur i des extrémités de branche 18,19. Ces deux branches 18,19 sont réalisées en un matériau élastique et sont aptes à être introduites dans les échancrures 14,15 à l'encontre de la force élastique de rappel des deux branches l'une en direction de l'autre, de manière à entrer en contact électrique avec la broche, la pression de contact des branches sur les faces c,d de la broche étant assurée par la force élastique précitée. Ces branches 18,19 sont reliées l'une à l'autre, à l'une de leurs extrémités, par une partie de liaison 20 des deux branches 18,19 et comprennent à leurs extrémités opposées, respectivement deux parties d'extrémité 21,22 destinées à assurer le contact avec la broche 6. La partie de liaison 20 et les parties d'extrémité 21,22 sont reliées par une partie intermédiaire 23,24. Comme on le voit sur la figure 4, le plan P contenant la partie de liaison 20 est décalé suivant la hauteur des appareils, par rapport au plan Q contenant les parties d'extrémités précitées 21,22.

On voit donc que grâce à l'invention, il n'est pas possible à un utilisateur d'entrer en contact avec les faces latérales sous tension c,d de la broche 4 à 11 par les échancrures 14,15, notamment au cours de l'opération de raccordement.

Dans une autre réalisation illustrée sur les figures 6 et 7, les faces 25,26 des deux échancrures 14,15 qui s'étendent parallèlement à la direction longitudinale de la broche 4 à 11, sont fermées respectivement par deux parois électriquement isolantes 27,28 venues de matière avec la pièce isolante 12. Ainsi, la pièce isolante 12 se présente sous la forme d'une pièce de forme parallélépipédique creuse comportant sur sa face arrière, une ouverture (non visible) destinée à permettre le passage d'une broche, et sur sa face avant située en regard de la face de raccordement des appareils, deux ouvertures rectangulaires 29,30 séparées par une cloison isolante 31 située en bout de la broche 4 à 11. Dans cette réalisation, la largeur 1 des ouvertures 29,30 est choisie par rapport au diamètre du doigt d'épreuve 17, de manière à empêcher également son introduction au-delà d'une certaine limite, et à empêcher de ce fait ce dernier d'entrer en contact avec les parties sous tension du répartiteur D, c'est à dire les broches 4 à 11. La largeur 1 de ces ouvertures 29,30 est également définie de manière à autoriser l'introduction des branches 32,33 d'une pince de connexion 34 appartenant aux appareils et telle qu'illustrée sur la figure 7. Contrairement à la réalisation décrite en référence aux figures 1 à 5, dans cette seconde réalisation, la partie de liaison 35 et les branches 32,33 s'étendent dans un même plan. La pièce isolante 12 dans son ensemble, ne présente plus que deux ouvertures (ou orifices) 29,30 d'accès à la broche, situés de part et d'autre de la broche et en regard de la face de raccordement R des appareils.

On voit que dans cette réalisation, la largeur 1 réduite des ouvertures 29,30 permet d'empêcher un doigt d'épreuve ou le doigt d'un opérateur d'accéder à la broche à travers lesdites ouvertures 29,30.

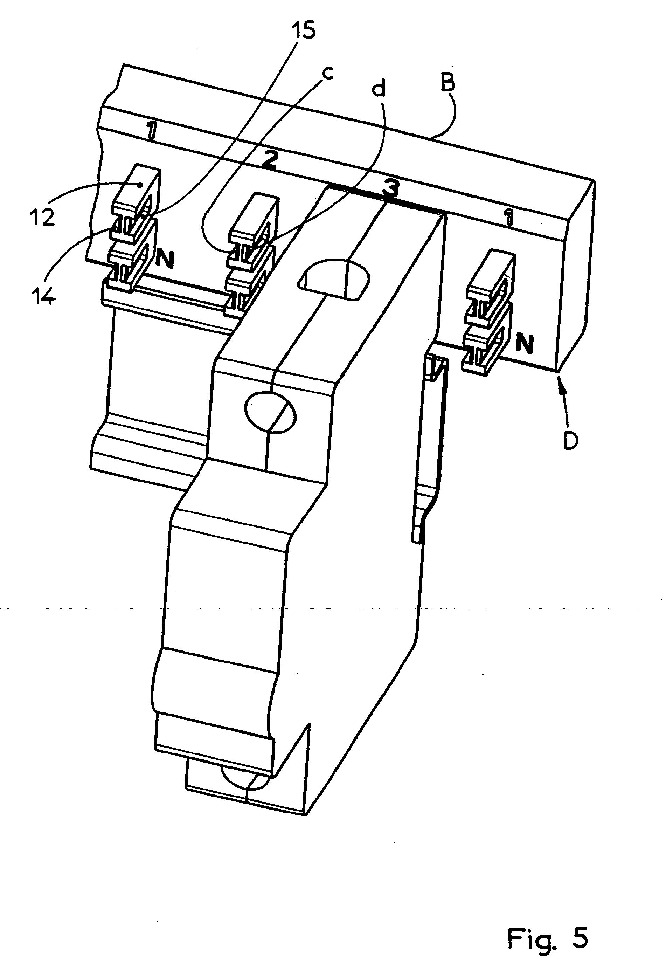

Sur les figures 5 et 6, les appareils de puissance 1,2 selon l'invention, adaptés à être reliés à un dispositif D suivant l'invention, comprennent pour chaque module la,2a,2b,2c,2d, une pince pour le raccordement à l'une des broches et un évidemment destiné à recevoir une broche non utilisée, ou bien deux bornes, lorsqu'il s'agit d'un appareil 1 du type unipolaire et neutre. Sur la figure 6 sont associés sur un même rail, un disjoncteur unipolaire et neutre 1 et un disjoncteur tripolaire et neutre 2. Ce disjoncteur tripolaire et neutre comporte de gauche à droite, et étant non visibles sur la figure, une borne pour une dent de neutre et un évidemment pour le logement d'une dent de phase, pour ce qui concerne le premier module 2a, et une borne de phase et un évidemment de neutre, pour les trois modules suivants 2b,2c,2d. On notera que cet agencement permet de disposer sur un même rail un ensemble d'appareils de types différents dans un encombrement réduit. Avantageusement, ces pinces de connexion sont montées à l'intérieur du boîtier de l'appareil, de manière à empêcher à un doigt d'épreuve d'entrer en contact avec les parties sous tension de l'appareil.
Avantageusement, pour les deux réalisations décrites notamment, les pièces isolantes 12 sont réalisées en plastique.
Avantageusement encore, ces barres étant logées dans un boîtier isolant allongé, les pièces isolantes 12 sont venues de matière avec le boîtier.

Bien entendu, l'invention n'est pas limitée aux modes de réalisation décrits et illustrés qui n'ont été donnés qu'à titre d'exemple.

## Revendications

1. Dispositif d'alimentation électrique d'appareils modulaires de puissance tels des disjoncteurs, lesdits appareils étant destinés à être montés sur un rail et ayant des boîtiers accolés côte à côte, comprenant un ensemble de barres s'étendant parallèlement au rail et distribuant chacune une phase ou le neutre, et des broches s'étendant perpendiculairement auxdites barres et reliées électriquement chacune à l'une des barres, de manière à distribuer successivement les différentes phases et le neutre, et ce de manière répétitive le long du rail, lesdites broches étant destinées à être reliées électriquement chacune à l'une des plages de contact de l'appareil,
**caractérisé en ce que** l'une au moins des broches précitées (4 à 11) est partiellement recouverte par une pièce électriquement isolante (12), ladite pièce (12) étant conformée de manière à empêcher à un doigt d'épreuve (17) d'entrer en contact avec les parties sous tension (c,d) de ladite broche (4 à 11), mais à autoriser le raccordement électrique de la broche (4 à 11) à un élément de connexion (E) relié électriquement à l'une des plages d'un appareil (1,2).

2. Dispositif selon la revendication 1, **caractérisé en ce que** la pièce isolante précitée (12) présente une forme sensiblement parallélépipédique et comporte un logement (13) destiné à recevoir la broche (4 à 11) est deux échancrures (14,15) s'étendant parallèlement à la direction longitudinale de la broche (4 à 11) de part et d'autre de ladite broche (4 à 11), lesdites échancrures (14,15) étant dimensionnées de manière à empêcher à un doigt d'épreuve (17) d'entrer en contact électrique avec les parties (c,d) de la broche (4 à 11) dégagées par les échancrures (14,15), mais à permette le raccordement avec l'élément de connexion précité (E).

3. Dispositif selon la revendication 1 ou 2, **caractérisé en ce que**, pour au moins l'une des broches (4 à 11), la pièce isolante précitée (12) comporte en outre deux parois isolantes (27,28) fermant les faces (25,26) des échancrures (14,15) s'étendant parallèlement à la direction longitudinale de la broche (4 à 11), de manière que la pièce isolante (12), ne présente plus que deux ouvertures (29,30) d'accès à la broche (4 à 11) situés de part et d'autre de la broche (4 à 11) et en regard de la face de raccordement (R) des appareils (1,2).

4. Dispositif selon la revendication 1 ou 2, **caractérisé en ce que** la hauteur (h) des échancrures (14,15) définie perpendiculairement à la direction longitudinale de la broche (4 à 11) et à celle des barres, est définie de manière à permettre le raccordement à l'élément de connexion (E) mais à empêcher à un doigt d'épreuve (17) d'entrer en contact avec la broche (4 à 11).

5. Dispositif selon la revendication 3, **caractérisé en ce que** les ouvertures (29,30) sont de forme sensiblement rectangulaire et **en ce que** la largeur 1 des ouvertures (29,30) parallèlement à la direction des barres, est définie de manière à empêcher qu'un doigt d'épreuve (17) n'entre en contact avec la broche, mais à autoriser le raccordement à l'élément de connexion (E).

6. Dispositif selon l'une quelconque des revendications 2 à 5, **caractérisé en ce que** la pièce isolante (12) comporte en outre une cloison isolante (16,31) séparant les deux échancrures (14,15) ou ouvertures précitées (29,30) et située en bout de la broche (4 à 11).

7. Dispositif selon l'une quelconque des revendications précédentes, **caractérisé en ce que** le ou chaque élément de connexion (E) comprend une pince, ladite pince comportant deux branches (18,19 ou 32,33) aptes à être amenées respectivement en contact avec les deux faces c,d de la broche (4 à 11) libérées par les échancrures (14,15), en position raccordée de la pince.

8. Dispositif selon l'une quelconque des revendications précédentes, **caractérisé en ce que** les barres étant logées dans un boîtier isolant allongé (B), la ou chaque pièce isolante précitée (12) est venue de matière avec ledit boîtier (B).

9. Dispositif selon l'une quelconque des revendications précédentes, **caractérisé en ce que** la pièce isolante précitée (12) est réalisée en plastique.

10. Dispositif selon l'une quelconque des revendications précédentes, **caractérisé en ce qu'**il comporte une broche (8 à 11) distribuant le neutre placée en dessous de chaque broche (4 à 7) distribuant une phase.

11. Combinaison d'un appareil de coupure électrique tel un disjoncteur comportant sur sa face de raccordement (R) au moins une pince de connexion et d'un dispositif selon l'une quelconque des revendications précédentes destiné à coopérer avec ladite pince.

12. Combinaison selon la revendication 11, **caractérisée en ce que** la ou chaque pince comporte deux branches (1.8,19,32,33) réalisées en un matériau élastique, lesdites branches étant aptes à être introduites dans les échancrures (14,15) ou ouvertures (29,30) à l'encontre de la force élastique de rappel des deux branches (18,19,32,33) l'une en direction de l'autre, et à entrer en contact avec les faces dégagées (c,d) de la broche (4 à 11), la pression de contact des branches (18,19,32,33) sur les faces c,d de la broche (4 à 11) étant assurée par la force élastique précitée.

13. Combinaison selon la revendication 12, **caractérisée en ce que** les branches (18,19,32,33) sont reliées, à l'une de leurs extrémités, par une partie de liaison (20), et présentent à leurs extrémités opposées respectivement deux parties d'extrémité (21,22) aptes à être amenées en contact avec ladite broche (4 à 11), et **en ce que** le plan P contenant la partie de liaison (20) est décalé suivant la hauteur du boîtier des appareils, par rapport au plan (Q) contenant les parties d'extrémités précitées (21,22).

14. Combinaison selon l'une quelconque des revendications 11 à 13, **caractérisée en ce que** ledit appareil comprend, par module (2a,2b,2c,2d), une pince pour le raccordement à l'une des broches (4 à 11) d'un dispositif (D) selon l'une quelconque des revendications précédentes, et un évidemment destiné à recevoir une broche non utilisée dudit dispositif.

15. Combinaison selon l'une quelconque des revendications 11 à 14, **caractérisé en ce que** ledit appareil est du type trois phases plus neutre.

16. Combinaison selon l'une quelconque des revendications 1 à 15, **caractérisé en ce que** la ou lesdites pinces (est) sont miontée(s) à l'intérieur du boîtier de l'appareil, de manière à empêcher à un doigt d'épreuve d'entrer en contact avec les parties sous tension de l'appareil.

## Claims

1. A device for supplying electric power to modular power apparatuses such as circuit breakers, said apparatuses being designed to be fitted on a rail and having cases adjoined side by side, comprising a set of bars extending parallel to the rail and each distributing a phase or the neutral, and prongs extending perpendicularly to said bars and each electrically connected to one of the bars so as to successively distribute the different phases and neutral repetitively along the rail, said prongs being designed to each be electrically connected to one of the contact terminal strips of the apparatus,
**characterized in that** at least one of the above-mentioned prongs (4 to 11) is partially covered by an electrically insulating part (12), said part (12) being shaped such as to prevent a test finger (17) from coming into contact with the live parts (c,d) of said prong (4 to 11), but to allow electrical connection of the prong (4 to 11) with a connecting part (E) electrically connected to one of the terminal strips of an apparatus (1,2).

2. The device according to claim 1, **characterized in that** the above-mentioned insulating part (12) presents a substantially parallelepipedic shape and comprises a housing (13) designed to receive the prong (4 to 11) and two notches (14,15) extending parallel to the longitudinal direction of the prong (4 to 11) on each side of said prong (4 to 11), said notches (14,15) being dimensioned such as to prevent a test finger (17) from coming into electrical contact with the parts (c,d) of the prong (4 to 11) substantially freed by the notches (14,15), but to allow connection with the above-mentioned connecting part (E).

3. The device according to claim 1 or 2, **characterized in that**, for at least one of the prongs (4 to 11), the above-mentioned insulating part (12) further comprises two insulating walls (27,28) closing the faces (25,26) of the notches (14,15) extending parallel to the longitudinal direction of the prong (4 to 11) so that the insulating part (12) then only presents two openings (29,30) for access to the prong (4 to 11) located on each side of the prong (4 to 11) and facing the connection face (R) of the apparatuses (1,2).

4. The device according to claim 1 or 2, **characterized in that** the height (h) of the notches (14,15) defined perpendicularly to the longitudinal direction of the prong (4 to 11) and to that of the bars is defined such as to allow connection to the connecting part (E) but to prevent a test finger (17) from coming into contact with the prong (4 to 11).

5. The device according to claim 3, **characterized in that** the openings (29,30) are of substantially rectangular shape and that the width (I) of the openings (29,30) in a direction parallel to that of the bars is defined such as to prevent a test finger (17) from coming into contact with the prong, but to allow connection to the connecting part (E).

6. The device according to any one of claims 2 to 5, **characterized in that** the insulating part (12) further comprises an insulating partition (16,31) separating the above-mentioned two notches (14,15) or openings (29,30) and located at the end of the prong (4 to 11).

7. The device according to any one of the foregoing claims, **characterized in that** the or each connecting part (E) comprises a contact grip, said grip comprising two branches (18,19 or 32,33) able to be moved respectively into contact with the two faces (c,d) of the prong (4 to 11) freed by the notches (14,15), in the connected position of the grip.

8. The device according to any one of the foregoing claims, **characterized in that** the bars being housed in an elongate insulating case (B), the or each above-mentioned insulating part (12) is cast together with said case (B).

9. The device according to any one of the foregoing claims, **characterized in that** the above-mentioned insulating part (12) is made of plastic.

10. The device according to any one of the foregoing claims, **characterized in that** it comprises a prong (8 to 11) distributing the neutral placed underneath each prong (4 to 7) distributing a phase.

11. A combination of an electrical switchgear apparatus such as a circuit breaker comprising at least one connecting grip on its connection face (R) and of a device according to any one of the foregoing claims designed to operate in conjunction with said grip.

12. The combination according to claim 11, **characterized in that** the or each contact grip comprises two branches (18,19,32,33) made from flexible material, said branches being able to be inserted in the notches (14,15) or openings (29,30) against the elastic return force of the two branches (18,19,32,33) in the direction of one another, and to come into contact with the freed faces (c,d) of the prong (4 to 11), the contact pressure of the branches (18,19,32,33) on the faces (c,d) of the prong (4 to 11) being provided by the above-mentioned elastic force.

13. The combination according to claim 12, **characterized in that** the branches (18,19,32,33) are joined at one of their ends by a joining part (20) and respectively present at their opposite ends two end parts (21,22) designed to be brought into contact with said prong (4 to 11), and **in that** the plane P containing the joining part (20) is offset in the heightwise direction of the case of the apparatuses with respect to the plane (Q) containing the above-mentioned end parts (21,22).

14. The combination according to any one of claims 11 to 13, **characterized in that** said apparatus comprises, per module (2a,2b,2c,2d), a grip for connection to one of the prongs (4 to 11) of a device (D) according to any one of the foregoing claims, and a recess designed to receive an unused prong of said device

15. The combination according to any one of claims 11 to 14, **characterized in that** said apparatus is of the three-phase plus neutral type.

16. The combination according to any one of claims 11 to 15, **characterized in that** said grip(s) is (are) fitted inside the case of the apparatus in such a way as to prevent a test finger from coming into contact with the live parts of the apparatus.

## Patentansprüche

1. Stromversorgungsanordnung für modulare Leistungsschaltgeräte wie beispielsweise Leistungsschalter, die auf einer Tragschiene montiert werden und seitlich aneinandergereihte Gehäuse umfassen, welche Anordnung mehrere, parallel zur Tragschiene angeordnete und jeweils eine Phase bzw. den Neutralleiter verteilende Stromschienen sowie rechtwinklig zu den genannten Stromschienen angeordnete und jeweils mit einer der Schienen elektrisch verbundene Kontaktmesser umfasst, derart dass nacheinander die einzelnen Phasen und der Neutralleiter in sich wiederholender Abfolge entlang der Schiene verteilt werden, wobei die genannten Kontaktmesser dazu dienen, jeweils mit einem der Anschlüsse des Schaltgeräts elektrisch verbunden zu werden,
**dadurch gekennzeichnet, dass** mindestens eines der genannten Kontaktmesser (4 bis 11) durch ein elektrisch isolierendes Teil (12) teilweise abgedeckt ist, welches Teil (12) so ausgebildet ist, dass eine Messspitze (17) nicht mit den spannungsführenden Teilen (c, d) des genannten Kontaktmessers (4 bis 11) in Kontakt gelangen kann, der elektrische Anschluss des Kontaktmessers (4 bis 11) an ein, mit einem der Anschlüsse eines Schaltgeräts (1, 2) elektrisch verbundenen Anschlusselement (E) jedoch möglich ist.

2. Anordnung nach Anspruch 1, **dadurch gekennzeichnet, dass** das genannte Isolierteil (12) annähernd kastenförmig ausgebildet ist und eine zur Lagerung des Kontaktmessers (4 bis 11) dienende Aufnahme (13) sowie zwei parallel zur Längsachse des Kontaktmessers (4 bis 11), auf beiden Seiten des genannten Kontaktmessers (4 bis 11) angeordnete Aussparungen (14, 15) umfasst, welche Aussparungen (14,15) so bemessen sind, dass eine Messspitze (17) nicht mit den durch die Aussparungen (14, 15) freigelegten Teilen (c, d) des Kontaktmessers in elektrischen Kontakt gelangen kann, die Verbindung mit dem genannten Anschlusselement (E) jedoch möglich ist.

3. Anordnung nach Anspruch 1 oder 2, **dadurch gekennzeichnet, dass** bei mindestens einem der Kontaktmesser (4 bis 11) das genannte Isolierteil (12) außerdem zwei Isolierstoffwände (27, 28) umfasst, welche die parallel zur Längsachse des Kontaktmessers (4 bis 11) verlaufenden Seitenflächen (25, 26) der Aussparungen (14, 15) abdecken, derart dass das Isolierteil (12) nur noch zwei Zugangöffnungen (29, 30) zum Kontaktmesser (4 bis 11) aufweist, die auf beiden Seiten des Kontaktmessers (4 bis 11) ausgebildet sind und der Anschlussseite (R) der Schaltgeräte (1, 2) gegenüber liegen.

4. Anordnung nach Anspruch 1 oder 2, **dadurch gekennzeichnet, dass** die rechtwinklig zur Längsachse des Kontaktmessers (4 bis 11) und der Stromschienen verlaufende Höhe (h) der Aussparungen (14, 15) so bemessen ist, dass zwar der Anschluss an das Anschlusselement (E) möglich ist, eine Messspitze (17) jedoch nicht in Kontakt mit dem Kontaktmesser (4 bis 11) gelangen kann.

5. Anordnung nach Anspruch 3, **dadurch gekennzeichnet, dass** die Öffnungen (29, 30) annähernd rechteckig ausgebildet sind und dass die Breite I der Öffnungen (29, 30) parallel zur Ausrichtung der Stromschienen so bemessen ist, dass eine Messspitze (17) nicht mit dem Kontaktmesser in Kontakt gelangen kann, der Anschluss an das Anschlusselement (E) jedoch möglich ist.

6. Anordnung nach irgendeinem der Ansprüche 2 bis 5, **dadurch gekennzeichnet, dass** das Isolierteil (12) außerdem eine Isolierstoff-Trennwand (16, 31) umfasst, welche die beiden genannten Aussparungen (14, 15) bzw. Öffnungen (29, 30) trennt und am Ende des Kontaktmessers (4 bis 11) angeordnet ist.

7. Anordnung nach irgendeinem der vorhergehenden Ansprüche, **dadurch gekennzeichnet, dass** das bzw. jedes Anschlusselement (E) eine Kontaktzange mit zwei Schenkeln (18, 19 bzw. 32, 33) umfasst, die dazu ausgelegt sind, in der Verbindungsstellung der Kontaktzangen in Kontakt mit den beiden, durch die Aussparungen (14, 15) freigelegten Seitenflächen c, d des Kontaktmessers (4 à 11) zu gelangen.

8. Anordnung nach irgendeinem der vorhergehenden Ansprüche, **dadurch gekennzeichnet, dass** die Stromschienen in einem länglich geformten Isolierstoffgehäuse (B) angeordnet sind und das bzw. jedes der genannten Isolierteile (12) einstückig mit dem genannten Gehäuse (B) ausgebildet ist.

9. Anordnung nach irgendeinem der vorhergehenden Ansprüche, **dadurch gekennzeichnet, dass** das genannte Isolierteil (12) aus Kunststoff besteht.

10. Anordnung nach irgendeinem der vorhergehenden Ansprüche, **dadurch gekennzeichnet, dass** ein Kontaktmesser (8 bis 11) zur Verteilung des Neutralleiters unter jedem Kontaktmesser ( 4 bis 7) zur Verteilung einer Phase angeordnet ist.

11. Elektrisches Schaltgerät wie beispielsweise ein Leistungsschalter, das auf seiner Anschlussseite (R) mindestens eine Kontaktzange aufweist, die dazu ausgelegt ist, mit einer Anordnung D nach einem der vorhergehenden Ansprüche zusammenzuwirken.

12. Elektrisches Schaltgerät nach Anspruch 11, **dadurch gekennzeichnet, dass** die bzw. jede Kontaktzange zwei, aus einem biegsamen Material bestehende Schenkel (18, 19, 32, 33) umfasst, welche Schenkel dazu ausgelegt sind, unter Überwindung der elastischen Rückstellkräfte, die von den beiden Schenkeln (18, 19, 32, 33) in Richtung des jeweils anderen ausgeübt werden, in die Aussparungen (14, 15) bzw. Öffnungen (29, 30) einzugreifen und in Kontakt mit den freigelegten Seitenflächen (c, d) des Kontaktmessers (4 bis 11) zu gelangen, wobei der auf die Seitenflächen (c, d) des Kontaktmessers (4 bis 11) wirkende Kontaktdruck der Schenkel (18, 19, 32, 33) durch die genannten elastischen Kräfte gewährleistet wird.

13. Schaltgerät nach Anspruch 12, **dadurch gekennzeichnet, dass** die Schenkel (18, 19, 32, 33) an einem ihrer Enden über einen Verbindungsabschnitt (20) miteinander verbunden sind und an ihrem gegenüberliegenden Ende jeweils einen Endabschnitt (21, 22) aufweisen, der dazu ausgelegt ist, mit dem genannten Kontaktmesser (4 bis 11) in Kontakt zu gelangen, und dass die Ebene (P) des Verbindungsabschnitts (20), in der Höhe des Gehäuses der Schaltgerät gesehen, in Bezug zur Ebene (Q) der genannten Endabschnitte (21, 22) versetzt angeordnet ist.

14. Schaltgerät nach irgendeinem der Ansprüche 11 bis 13, **dadurch gekennzeichnet, dass** jedes seiner Module (2a, 2b, 2c, 2d) eine Kontaktzange zum Anschluss an eines der Kontaktmesser (4 bis 11) einer Anordnung (D) nach irgendeinem der vorhergehenden Ansprüche sowie eine Ausnehmung zur Einführung eines nicht verwendeten Kontaktmessers der genannten Anordnung umfasst.

15. Schaltgerät nach irgendeinem der Ansprüche 11 bis 14, **dadurch gekennzeichnet, dass** es als dreipoliges Schaltgerät mit Neutralleiter ausgebildet ist.

16. Schaltgerät nach irgendeinem der Ansprüche 11 bis 15, **dadurch gekennzeichnet, dass** die genannte Kontaktzange bzw. die genannten Kontaktzangen im Inneren des Gehäuses der Schaltgeräte angeordnet sind, so dass eine Messspitze nicht in Kontakt mit den spannungsführenden Teilen des Schaltgeräts gelangen kann.
